# EUROPÄISCHE PATENTANMELDUNG

(11) **EP 1 699 220 A1**
(43) Veröffentlichungstag der Anmeldung: **06.09.2006**
(21) Anmeldenummer: 06000977.6
(22) Anmeldetag: 18.01.2006
(51) Int. Cl.: H04M 3/42

(54) **Temporäre bedingungsabhängige Voreinstellung von Kommunikationsanschlüssen**

(30) Priorität: 04.03.2005 DE 102005009942
(71) Anmelder: Deutsche Telekom AG, 53113 Bonn (DE)
(72) Erfinder: Brackmann, Ludwig, Dipl.-Ing., 53225 Bonn (DE)

(57) **Zusammenfassung**

Verfahren zur Nutzung eines einem Kommunikationsnetz 1, insbesondere einem Telefonnetz oder dem Internet, zugeordneten Anschlusses 4 für ein Endgerät 5, über das ein Nutzer 2 eine Verbindung zu einem zweiten über das Kommunikationsnetz 1 erreichbaren Anschluss-6 aufbaut, wobei der zweite Anschluss 6 einem Anbieter 3 zugeordnet ist, wobei der Anbieter 3 über ein Medium 14, insbesondere über TV oder Radio, eine aktuelle Aktion anbietet, an der sich der Nutzer 2 durch Anwahl einer der Aktion zugeordneten Kennung (Kommunikationsadresse) beteiligen kann, wobei die Beteiligung an der Aktion für den Nutzer 1 durch die Anwahl der Kennung und durch den entsprechenden Aufbau der Verbindung während eines definierten Zeitfensters möglich ist, wobei der Anschluss 4 und/oder das Endgerät 5 des Nutzers 2 insofern aktiv geschaltet wird, als der Nutzer 2 für die Dauer des Zeitfensters die Möglichkeit bekommt, durch Eingabe eines Kurzbefehls die der Aktion zugeordnete Kennung anzuwählen, um sich durch Herstellung der Verbindung an der Aktion zu beteiligen.

## Beschreibung

Die vorliegende Erfindung betrifft ein Verfahren zur Nutzung eines einem Telekommunikationsnetz, insbesondere einem Telefonnetz, zugeordneten Anschlusses für ein Endgerät, über das ein Nutzer eine Verbindung zu einem zweiten über das Telekommunikationsnetz erreichbaren Anschluss aufbaut, wobei dieser zweite Anschluss einem Anbieter zugeordnet ist, der über ein Medium, insbesondere über TV oder Radio, eine aktuelle Aktion, beispielsweise einen Kauf, anbietet, wobei sich der Nutzer an der Aktion durch Anwahl einer der Aktion zuzuordnenden Kennung beteiligen kann, wobei die Beteiligung an der Aktion für den Nutzer durch die Anwahl der Kennung und durch den entsprechenden Aufbau der Verbindung während eines definierten Zeitfensters möglich ist. Die Erfindung betrifft zudem ein System zur Umsetzung des Verfahrens.

Derartige Verfahren sind insbesondere aus Fernsehsendungen, beispielsweise als "tele-shopping" oder "power", aber auch aus Radiosendungen bekannt. Dabei werden im Laufe einer von Zuschauern und/oder Zuhörern mitverfolgten Sendung Telefonnummern bekannt gegeben, die der Zuschauer oder Zuhörer als Nutzer dieses Verfahrens anwählen kann. Mit der Anwahl löst er die dargebotene Aktion aus, sobald die Verbindung zustande kommt. Beispielsweise wird im Rahmen solcher Sendungen, in denen einer aus der Gruppe der vorgestellten Kandidaten auszuwählen ist, eine Telefonnummer angegeben, die gefolgt ist von einer dem jeweils zu wählenden Kandidaten zugeordneten Nummer. In anderen Sendungen kann die Öffentlichkeit an einer "pro" oder "contra" Abstimmung teilnehmen, wobei eine Telefonnummer gefolgt von der "0" oder der "1" entweder "ja" oder "nein" bedeutet.

Vom "tele-shopping" ist es bekannt, dass während der Sendung ein bestimmtes Produkt angeboten und beworben wird, das während der Sendung durch Anwahl einer eingeblendeten Telefonnummer bestellt werden kann. Dazu werden "Direct-Response"-Telefonnummern, oder "Hotlines" zusammen mit einer Artikel- oder Bestellnummer im laufenden Programm gesendet. Der Kunde muss für die Bestellung zunächst die Telefonnummer auf seinem Telefon eingeben, dann wählen und nachfolgend beispielsweise eine Bestellnummer und/oder andere Daten eingeben.

Nachteilig an den bekannten Verfahren ist, dass das Zeitfenster, in denen der Anruf möglich ist, in vielen Fällen verhältnismäßig kurz ist und dem Nutzer somit kaum Zeit bleibt, die angegebene und mitunter komplizierte Telefonnummer anzuwählen. Oft hängt der Erfolg des Durchkommens zum Anbieter auch von der Geschwindigkeit ab, mit der ein Nutzer die angegebene Telefonnummer anwählt. Dabei kann die Geschwindigkeit gerade bei der Beteiligung an einer Auslobung entscheidend sein, wenn nach der Reihenfolge des Eingangs bewertet wird. Alle diese Dinge stellen gewisse Hürden dar, die der Kunde überwinden muss, um Telekommunikationsumsatz sowie Mehrwert- oder Kaufumsatz zu tätigen.

Die Aufgabe der vorliegenden Erfindung ist es nunmehr, ein gattungsgemäßes Verfahren zu schaffen, das sich mit einfachen Mitteln kostengünstig umsetzen lässt und das dem Nutzer eine möglichst komfortable, unmittelbare und schnelle Anwahl der einer solchen Aktion zugeordneten Kennung ermöglicht.

Diese Aufgabe wird durch ein Verfahren mit den kennzeichnenden Merkmalen des Anspruch 1 gelöst. Vorteilhafte Ausgestaltungen des Verfahrens sind in den Unteransprüchen genannt.

Der wesentliche Grundgedanke der Erfindung liegt darin, den Anschluss oder das Endgerät des Nutzers innerhalb des Zeitfensters gewissermaßen aktiv oder "scharf" zu schalten, so dass schon durch die Eingabe eines Kurzbefehls die gewünschte Verbindung zum Anbieter respektive zur angebotenen Aktion hergestellt wird. Der Nutzer bekommt temporär für die Dauer des Zeitfensters die Möglichkeit, durch unproblematische Eingabe des einfachen Kurzbefehls die der Aktion zugeordnete Kennung anzuwählen, um sich durch die Herstellung der Verbindung an der Aktion zu beteiligen. Mit dem erfindungsgemäßen Verfahren braucht der Nutzer nicht länger die eingeblendeten Telefonnummern umständlich abzutippen, sondern kann sich mit einem einfachen Tastendruck an der zur Auswahl stehenden Aktion beteiligen. Der einfach einzugebende Kurzbefehl leitet somit eine Teilnahme oder einen Kauf ein.

Das erfindungsgemäße Verfahren lässt sich im Prinzip mit der bekannten Funktion "Verbindung ohne Wahl" vergleichen. Diese bewirkt, dass beispielsweise beim Abheben des Hörers oder bei Eingabe einer Kurzwahl die Verbindung z. B. zur Polizei oder ähnlichen wichtigen Anschlüssen unmittelbar hergestellt wird. Dazu wird der Anschluss des Teilnehmers in der vorgeschalteten Vermittlungsstelle entsprechend der Anforderung temporär konfiguriert. Ein vom Endgerät initiierter Verbindungsaufbau wird dann an Vermittlungsstelle "abgefangen" und es wird die voreingestellte Verbindung hergestellt.

In diesem Sinne wird der Anschluss erfindungsgemäß aktiv geschaltet, indem seine Vermittlungsstelle durch Übersendung von Daten fernprogrammiert wird. Dabei geschieht die temporäre Programmierung über einen Computer, der mit der Vermittlungsstelle verbunden ist. So kann der zentral an ein Datenleitungsnetz angeschlossene Rechner als "Konfigurationsserver" dazu dienen, die Funktion anhand vom Anbieter vorgegebener Parameter in den Vermittlungsstellen einzustellen. Nach der Aktivierung kann der Teilnehmer die Verbindung über die Vermittlungsstelle zum Anbieter ohne Eingabe einer Anwahl nur durch einen Kurzbefehl herstellen, sobald die aktuelle Aktion über das Medium präsentiert wird. Darüber hinaus erforderliche Daten kann er bei bestehender Verbindung gegebenenfalls "manuell" eingeben.

Als Datenleitungsnetz zwischen Konfigurationsserver und den Vermittlungsstellen kann entweder ein separates, die Vermittlungsstellen verbindendes Netz, oder das Telefonnetz oder aber das Internet eingesetzt werden. Der Anbieter steuert die Konfiguration der Vermittlungsstellen dann über ein auf dem Konfigurationsserver realisiertes Programm, das er über das Datenleitungsnetz aufruft.

Diese Ausführungsform der Erfindung hat den Vorteil, dass sie unabhängig von der Technologie der Endgeräte ist und sogar auch analoge Endgeräte unterstützt. Allerdings ist die in den Vermittlungsstellen eingesetzte Hardware für die schnelle Programmierung der einzelnen Anschlüsse momentan kaum geeignet. So würde es mit der verwendeten Hardware zu lange dauern, eine größere Anzahl von Anschlüssen über die Vermittlungsstellen zu konfigurieren. Insofern ist diese Art der Umsetzung der Erfindung zumindest momentan noch nicht sonderlich praktikabel.

In einer vorteilhaften Ausführungsform der Erfindung werden nicht die Anschlüsse innerhalb der Vermittlungsstellen konfiguriert, sondern es werden unmittelbar die Einstellungen der Endgeräte ("CPE", Customer Premises Equipment) verändert. Dabei werden Daten, beispielsweise Werte von Programmvariablen und/oder komplette Programme und/oder die Konfigurationsparameter zur Einstellung der vorhandenen Programme, auf die CPE geladen. Insbesondere werden die in der Aktion angegebene Kennung des Anbieters und die gegebenenfalls benötigten Zusatzparameter übertragen. Der Übertragungsweg für die Konfiguration ist das Kommunikationsnetz, beispielsweise das Telefonnetz oder das Internet, an das die einzelnen CPE angeschlossen sind. Für die Organisation wird wiederum ein Konfigurationsserver eingesetzt, wobei die Herstellung der Verbindung über den zentralen Server des Netzbetreibers geschieht.

Wie dargelegt, ist es möglich, die Kommunikationsadresse, also insbesondere die in der Aktion angegebene Kennung, mit eventuellen Zusatzparametern, wie z.B. Authorisierungsdaten, zusammen im Endgerät zu hinterlegen. Es kann aber auch von Vorteil sein, die Kommunikationsadresse auf dem zentralen Server des Netzbetreibers zu hinterlegen, während nur die Zusatzparameter auf das Endgerät geladen werden.

Die Konfiguration der Endgeräte, die über eine kabelgebundene oder über eine drahtlose Datenverbindung geschehen kann, hat den Vorteil, dass sie im Vergleich zur oben beschriebenen Konfiguration der Vermittlungsstellen schnell und damit parallel zur Ausstrahlung der Aktion erfolgen kann, zumindest wenn die Endgeräte die erforderliche Hardware aufweisen und die Datenübertragung über das Netz mit entsprechend hoher Geschwindigkeit und Bandbreite geschieht. Diese Art der Fernprogrammierung ist bei den heute bekannten Endgeräten, beispielsweise im UMTS-Netz im Mobilfunk möglich. Auch im Festnetz ist ein Umkonfigurieren mit "Voice over IP" - Telefonen (auch SIP-Telefonen) möglich. Es kann auch vorteilhaft sein, mehrere Tasten des Endgerätes mit verschiedenen Kurzbefehlen zu belegen. Für den Netzanbieter ist es insbesondere von Vorteil, dass die bestehenden PSTN-Vermittlungsstellen nicht von dem Verfahren betroffen sind, deren Hardware somit nicht angepasst werden braucht.

Ganz allgemein ist es von Vorteil, wenn der Anschluss und/oder das Endgerät so konfiguriert ist, dass der Nutzer die Funktion mit einem Tastendruck auf seinem Endgerät relativ leicht überspringen kann, um "normal" zu telefonieren. Es kann auch eine Funktion "Verbindung ohne Wahl mit Verzögerung" realisiert werden, die eine gewisse Zeitspanne zur Eingabe einer alternativen Zielrufnummer bietet.

Um eine Sicherheit vor Missbrauch und vor übereilten oder versehentlichen Eingaben, beispielsweise durch unbewussten Tastendruck von Kindern, zu gewährleisten, ist es von Vorteil, wenn zusätzlich zur Eingabe des Kurzbefehls außerdem noch eine bewusste Willensäußerung, z.B. ein zweiter Tastendruck oder eine Spracheingabe, des Nutzers angefordert wird. Über eine solche weitere Sicherungseingabe kann auch eine Authentifikation durchgeführt werden, bei der ein Nutzer beispielsweise seine vorher festgelegte Kennung über das Tastenfeld des Telefons eingibt. Dabei kann die Sicherungseingabe vorher definiert sein oder individuell über eine vom Endgerät ausgegebene Abfrage vorgegeben werden. In einer besonders vorteilhaften Ausführungsform wird eine gesonderte Information zu dem angebotenen Produkt von Anbieter auf das Ausgabemittel des Endgerätes gesendet, die sich der Kunde ansehen kann, bevor er den Kauf endgültig durch die Sicherungseingabe bestätigt. Diese Sicherungseingabe muss nicht unbedingt innerhalb des aktiven Zeitfensters durchgeführt werden, da die Verbindung zum Anbieter und damit zu dem im Zeitfenster beworbenen Produkt schon steht.

Der besondere Vorteil der Erfindung liegt letztendlich, dass Nutzer lediglich den Hörer abzuheben braucht, bevor er durch die Sicherheitseingabe kundtut, dass er kaufen oder abstimmen möchte. Damit entfällt jegliche umständliche Übermittlung von Telefonnummern, Bestellnummern oder anderer Parameter vom TV-Bild zum Telefon.

In einer vorteilhaften Ausführungsform der Erfindung wird dem Endgerät, nachdem sich der Anschluss innerhalb des Zeitfensters erfolgreich "eingeloggt" hat eine weitere Information, beispielsweise als Text- oder Sprachmeldung zugesendet, die den Nutzer über weitere Details der Aktion aufklärt. Diese Information kann beispielsweise Produktinformation sein.

Gewöhnlich wird die aktuelle Aktion über ein öffentlich zugängliches Medium ohne Rückkanal, wie TV, Radio oder auch Internet, präsentiert und entsprechend über einen Fernseher, ein Rundfunkgerät oder einen Computer, also über ein vom Endgerät getrenntes öffentlich wahrnehmbares Medium, ausgegeben. Dabei sitzt der Nutzer beispielsweise mit seinem Telefon in der Hand vor dem Fernseher und bestellt über einen einfachen Tastendruck auf dem Bedienfeld des Telefons die gerade beim "tele-shopping" angebotene Ware. Bei einer anderen besonderen Ausführungsform der Erfindung wird das Endgerät des Nutzers, beispielsweise sein mobiles Telefon oder sein PDA, einerseits für die Ausgabe der öffentlichen Sendung und andererseits für die Eingabe genutzt. Das öffentlich wahrnehmbare Medium wird somit über ein Ausgabemittel des Endgerätes, wie insbesondere den Bildschirm oder den Lautsprecher, ausgegeben. Diese Art der Ausgabe ist gerade im Fall der besonders breitbandigen Netze, wie WLAN oder UMTS, besonders vorteilhaft.

Dabei ist es von Vorteil, dass der Nutzer die ferneingestellten Informationen im Display seines Endgeräts optimal verfolgen kann, wobei er vorteilhafterweise durch das Drücken eine Sondertaste das "Power-Shoppen" überspringen und "normal" telefonieren kann. Um die Handhabung dieser Ausgestaltungsform der Erfindung so bequem wie möglich zu machen, werden vorteilhafterweise Endgeräte mit einem großem Touch Screen Display verwendet, auf dem die aktuellen Aktionen, insbesondere die Produktinfos, angezeigt werden können.

In der Praxis kann das Verfahren folgendermaßen umgesetzt werden: Ein Nutzer, meldet sich zur Teilnahme am TV-Power-Shopping beim dem Veranstalter des TV-Shoppings an. Dazu hinterlegt er seine persönlichen Daten, wie den Namen, die Adresse, die Kontoverbindung und bestimmte Wunschthemen sowie eine oder mehrere Telekommunikationsadressen, wobei mindestens eine Telefonnummer und gegebenenfalls eine weitere Adresse zur eindeutigen Adressierung seines Endgeräts erforderlich sind. Diese Eingabe kann per Sprachtelefonie oder auch über eine Internetseite geschehen. Diese Angaben sind vorteilhafterweise in einer für verschiedene Anbieter zugänglichen Datei registriert. Nutzer können auch parallel zur Fernsehzeitung ihren eigenen Shopping- und Voting-Kalender erstellen.

Der Veranstalter des TV-Shoppings kann nun parallel zur Aussendung seiner Sendung die Telefone seiner Endnutzer durch Umkonfigurieren so vorbereiten, dass die Telefonnummer des TV-Shops sowie die Bestellnummer des momentan über den TV-Shopping-Kanal kommunizierten Produkts in das Endgerät aus der Ferne vorkonfiguriert ist und das Endgerät aller angemeldeten Kunden zu bestimmten Sendezeiten, beispielsweise während der Wunschsendung des Kunden, auf Verbindung ohne Wahl direkt zum TV-Shop ferneingestellt ist.

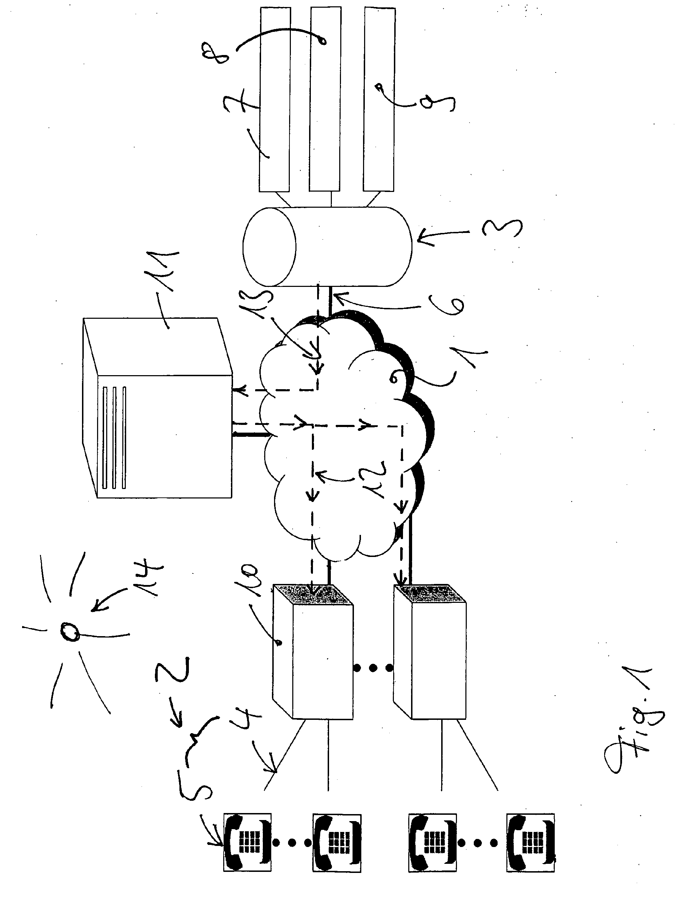

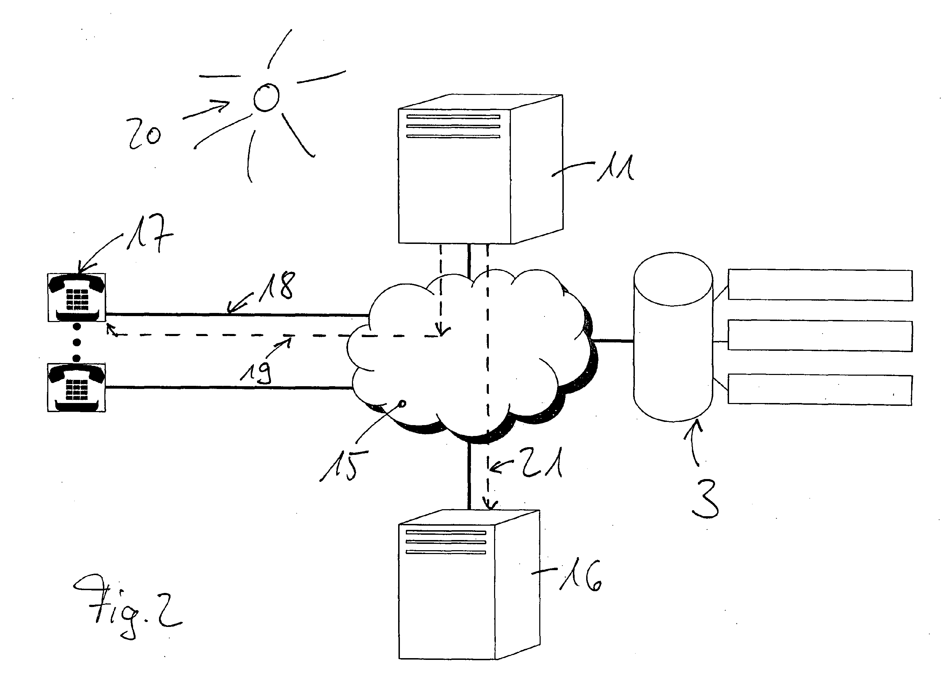

Nachfolgend wird die Erfindung anhand der Figuren 1 und 2 näher erklärt. Dabei zeigen:
- **Figur 1**: ein Schema des Verfahrens mit Konfiguration von Vermittlungsstellen und
- **Figur 2**: ein Schema des Verfahrens mit unmittelbarer Konfiguration von Endgeräten.

Figur 1 zeigt ein Schema des erfindungsgemäßen Verfahrensablaufes, der sich der Konfiguration von Vermittlungsstellen bedient. Als zentrales Element ist das Kommunikationsnetz 1 dargestellt, das in diesem Fall ein ISDN-Telefonnetz sein kann. Das Kommunikationsnetz 1 verbindet die Seite der Nutzer 2 mit der Seite des Anbieters 3, wobei jedem Nutzer 2 ein Anschluss 4 mit einem Endgerät 5 zugeordnet ist. Entsprechend ist dem Anbieter 3 ein Anschluss 6 zugeordnet, wobei über diesen Anschluss in diesem Fall drei Dienste, nämlich ein Call Center 7, ein Voting Center 8 und eine Mass Calling Plattform 9 über jeweils eine eigene Zusatzkennung erreichbar sind. Den Anschlüssen 4 der Nutzer 2 und dem Anschluss 6 des Anbieters 3, der über ein Medium seine aktuelle Aktion anbietet, sind Kennungen (Kommunikationsadressen) zugeordnet. Durch Anwahl der der Aktion zugeordneten Kennung wird die Verbindung während eines definierten Zeitfensters aufgebaut und der Nutzer kann sich an der Aktion beteiligen.

Die Anschlüsse 4 der Nutzer 2 werden über Vermittlungsstellen 10 verwaltet, wobei jede Vermittlungsstelle 10 eine Vielzahl von Anschlüssen 4 bedient. Die Vermittlungsstellen 10 sind an das Kommunikationsnetz 1 angeschlossen. Das erfiridungsgemäße Verfahren zur Aktivschaltung der Anschlüsse 4 wird von einem Konfigurationsserver 11 gesteuert, der ebenfalls an das Kommunikationsnetz 1 angeschlossen ist und der in den Vermittlungsstellen 10 die Funktion "Verbindung ohne Wahl" entsprechend den Anforderungen der aktuellen Aktion über das Netz auf dem Weg 12 parametrisiert. Diese Konfiguration der Vermittlungsstellen 10 steuert der Anbieter über den Weg 13.

Wird nun die aktuelle Aktion über ein Medium 14, wie TV, Radio oder Internet, dem Nutzer präsentiert, kann er durch Eingabe eines Kurzbefehls, nämlich durch Abheben des Hörers seines Telefons und durch Wahl der "1", für die Dauer eines Zeitfensters die der Aktion zugeordnete Kennung des Anbieters 3 anwählen. So ist es ihm möglich, die Verbindung zum Anbieter herzustellen und sich an der Aktion zu beteiligen.

Somit zeigt die Ausführungsform nach Figur 1, dass der Anschluss 4 aktiv geschaltet werden kann, indem die dem Anschluss zugeordnete Vermittlungsstelle 10 durch Übersendung von Daten entsprechend programmiert wird. Dabei geschieht die Programmierung über den zentralen Computer 11, der mit der Vermittlungsstelle 10 über das Netz 1 verbunden ist.

Bei der Ausführungsform des Verfahrens nach Figur 2 wird auf die Konfiguration von Vermittlungsstellen verzichtet. Wiederum sind über ein Kommunikationsnetz 15, das in diesem Falle das Internet ist, ein Konfigurationsserver 11 und ein Anbieter 3 verbunden. Zur Organisation der Verbindungen ist ein Applications-Server 16 als zentraler Computer des Netzbetreibers an das Netz angeschlossen. In diesem Ausführungsbeispiel sind die Endgeräte 17 unmittelbar über das Netz 15 zugänglich und können über die Leitung 18 direkt konfiguriert werden. Auch in diesem Fall steuert der Anbieter die Konfiguration der Endgeräte 17 über den Konfigurationsserver 11 auf dem Datenweg 19, wobei er die Kommunikations-Zieladresse des Anbieters 3 und die Zusatzparameter, wie Bestellnummer und Preis, der CPE 17 auf diesem Weg 19 mitteilt.

Wird die aktuelle Aktion über ein Medium 20, wie TV, Radio oder Internet, dem Nutzer präsentiert, kann er durch Eingabe eines Kurzbefehls für die Dauer eines Zeitfensters die der Aktion zugeordnete Kennung des Anbieters 3 anwählen. Damit ist es ihm möglich, die Verbindung zum Anbieter herzustellen und sich an der Aktion zu beteiligen. Für den Nutzer wurde die Übermittlung der Kommunikations-Zieladresse und der weiteren Informationen durch das System organisiert. Der Nutzer braucht lediglich die Auswahl angeben.

In einer anderen Ausführungsform erfolgt eine zeitlich und räumlich getrennte Übertragung von Kommunikations-Zieladresse des Anbieters 3 einerseits und der Zusatzparameter andererseits. Dabei wird die Kommunikations-Zieladresse auf dem Weg 21 auf den Applications-Server 16 gegeben, während die Zieladresse, wie oben beschrieben, über den Weg 19 auf den CPE 17 gespeichert wird.

## Patentansprüche

1. Verfahren zur Nutzung eines einem Kommunikationsnetz (1), insbesondere einem Telefonnetz oder dem Internet, zugeordneten Anschlusses (4) für ein Endgerät (5), über das ein Nutzer (2) eine Verbindung zu einem zweiten über das Kommunikationsnetz (1) erreichbaren Anschluss (6) aufbaut, wobei der zweite Anschluss (6) einem Anbieter (3) zugeordnet ist, wobei der Anbieter (3) über ein Medium (14), insbesondere über TV oder Radio, eine aktuelle Aktion anbietet, an der sich der Nutzer (2) durch Anwahl einer der Aktion zugeordneten Kennung (Kommunikationsadresse) beteiligen kann, wobei die Beteiligung an der Aktion für den Nutzer (1) durch die Anwahl der Kennung und durch den entsprechenden Aufbau der Verbindung während eines definierten Zeitfensters möglich ist,
**dadurch gekennzeichnet,**
**dass** der Anschluss (4) und/oder das Endgerät (5) des Nutzers (2) insofern aktiv geschaltet wird, als der Nutzer (2) für die Dauer des Zeitfensters die Möglichkeit bekommt, durch Eingabe eines Kurzbefehls die der Aktion zugeordnete Kennung anzuwählen, um sich durch Herstellung der Verbindung an der Aktion zu beteiligen.

2. Verfahren nach Anspruch 1,
**dadurch gekennzeichnet, dass** derAnschluss(4)aktiv geschaltet wird, indem die dem Anschluss (4) zugeordnete Vermittlungsstelle (10) durch Übersendung von Daten entsprechend programmiert wird, wobei die Programmierung über einen zentralen Computer (11) geschieht, der mit der Vermittlungsstelle (10) verbunden ist.

3. Verfahren nach Anspruch 1,
**dadurch gekennzeichnet, dass** das Endgerät (5) aktiv geschaltet wird, indem die geräteinterne Einstellung des Endgerätes (5) durch Übersendung von Daten programmiert wird, wobei die Programmierung über einen zentralen Computer (11) geschieht, der mit der Vermittlungsstelle (10) verbunden ist.

4. Verfahren nach Anspruch 3,
**dadurch gekennzeichnet, dass** im Rahmen der Programmierung die Kommunikationsadresse des Anbieters (3) auf einem zentralen Computer (11) des Netzbetreibers hinterlegt wird.

5. Verfahren nach einem der vorherigen Ansprüche,
**dadurch gekennzeichnet, dass** die Daten Werte für die Programmvariablen und/oder die Kommunikationsadresse des Anbieters (§) und/oder weitere Zusatzparameter enthalten.

6. Verfahren nach einem der vorherigen Ansprüche,
**dadurch gekennzeichnet, dass** der für die Programmierung eingesetzte Computer an das Kommunikationsnetz (1) angeschlossenen ist.

7. Verfahren nach einem der vorherigen Ansprüche,
**dadurch gekennzeichnet, dass** die Daten auf Veranlassung des Anbieters (3) gesendet werden, der auf den für die Programmierung eingesetzten Computer (11) zugreift.

8. Verfahren nach einem der vorherigen Ansprüche,
**dadurch gekennzeichnet, dass** zusätzlich zur Eingabe des Kurzbefehls eine weitere Sicherheitseingabe, insbesondere ein weiterer Tastendruck oder eine Spracheingabe, angefordert wird.

9. Verfahren nach einem der vorherigen Ansprüche,
**dadurch gekennzeichnet, dass**demAnschluss(4)des Nutzers (2) eine weitere Information, insbesondere als Text- oder Sprachmeldung, zugesendet wird, die dem Nutzer über ein Ausgabemittel des Endgerätes (5) ausgegeben wird.

10. Verfahren nach einem der vorherigen Ansprüche,
**dadurch gekennzeichnet, dass** der Nutzer (2) für das Aktivschalten in einer für den Anbieter (3) zugänglichen Datei registriert ist, in der seine persönlichen Daten, wie insbesondere der Name, die Adresse, die Kontoverbindung und/oder Wunschthemen aufgeführt sind.

11. Verfahren nach einem der vorherigen Ansprüche,
**dadurch gekennzeichnet, dass**dasöffentlich wahrnehmbare Medium (14) über ein Ausgabemittel des Endgerätes (5), insbesondere den Bildschirm oder den Lautsprecher, ausgegeben wird.

12. Verfahren nach einem der vorherigen Ansprüche,
**dadurch gekennzeichnet, dass** als Kurzbefehl das "Abheben" des Telephonhörers respektive das Aufnehmen der Verbindung vorgesehen ist.

13. Verfahren nach einem der vorherigen Ansprüche,
**dadurch gekennzeichnet, dass** mehrere verschiedene Kurzbefehle über auf verschiedene Tasten abrufbar sind.

14. System zur Durchführung des Verfahrens nach einem der vorherigen Ansprüche.
